# EUROPÄISCHE PATENTSCHRIFT

(11) **EP 0 753 746 B1**
(45) Veröffentlichungstag und Bekanntmachung des Hinweises auf die Patenterteilung: **18.10.2000**
(21) Anmeldenummer: 96890113.2
(22) Anmeldetag: 01.07.1996
(51) Int. Cl.: G01N 35/00, B65D 17/00, B67B 1/00

(54) **In einen Probenanalysator einsetzbare Reagenzienflaschen**
Reagent container adapted for a sample analyser
Récipient pour réactif intégrable dans un analyseur

(30) Priorität: 14.07.1995 AT 120395
(43) Veröffentlichungstag der Anmeldung: 15.01.1997
(73) Patentinhaber: AVL Medical Instruments AG, 8207 Schaffhausen (CH)
(72) Erfinder: Reischl, Franz, 8045 Graz (AT); Noormofidi, Taghi, Dipl.-Ing., 8054 Graz (AT); Kleinhappl, Erich, 8044 Graz (AT)
(74) Vertreter: Babeluk, Michael, Dipl.-Ing. Mag.

(56) Entgegenhaltungen:
- EP-A- 0 299 662
- EP-A- 0 431 352
- WO-A-91/00520
- FR-A- 1 115 785
- US-A- 4 046 610
- US-A- 4 163 500
- US-A- 5 334 178
- PATENT ABSTRACTS OF JAPAN vol. 017, no. 018 (M-1352), 13.Januar 1993 & JP 04 244853 A (SEIKO EPSON CORP), 1.September 1992,
- PATENT ABSTRACTS OF JAPAN vol. 006, no. 262 (P-164), 21.Dezember 1982 & JP 57 158551 A (HITACHI SEISAKUSHO KK), 30.September 1982,

## Beschreibung

Die Erfindung betrifft eine in einen Probenanalysator einsetzbare Reagenzienflasche, mit einer von einem elastischen, durchstechbaren Stopfen verschlossenen Entnahmeöffnung sowie einer Belüftungsöffnung, welcher elastische Stopfen außen von einer Schutzfolie abgedeckt ist und in einer von einem Entnahmeelement des Analysators durchstechbaren Position eine Ausnehmung zum leichteren Durchstechen der Folie aufweist.

Probenanalysatoren zur Messung von Proben aus Umwelt, Medizin und Technik benötigen meist eine Reihe von Reagenzienflaschen, aus welchen dem Analysator Kalibrier-, Kontroll- oder Waschlösungen zugeführt werden. Meist sind sogar mehrere unterschiedliche Fläschchen mit unterschiedlichen Kalibrierlösungen vorgesehen, welche in einem entsprechenden Aufnahmeteil des Analysators an Entnahmeelemente angedockt werden müssen. Weiters sind in derartigen Analysatoren auch Abfallbehälter zur Aufnahme der gemessenen Probe sowie der verbrauchten Reagenz-, Kontroll- und Reinigungsmedien notwendig.

Auf dem Markt erhältliche Reagenzienflaschen sind beispielsweise die aus der DE 39 38 559 A1 bekannten flachen Kunststofflaschen mit im wesentlichen ebenen Seitenflächen und rechteckigem Querschnitt. An der vorderen Schmalseite der Reagenzienflasche ist im Bodenbereich eine Entnahmeöffnung angeordnet, welche von einem elastischen, durchstechbaren Stopfen verschlossen ist. Weiters ist der Stopfen mit einer ebenfalls durchstechbaren Schutzfolie bedeckt. An der oberen Schmalseite der Reagenzienflasche ist eine Belüftungsöffnung angeordnet, welche vor dem Einsetzen in den Analysator mit einem Schraubverschluß verschlossen ist. Beim Einsetzen der Reagenzienflasche in einen Analysator ist ein gewisser Manipulieraufwand notwendig, um die Entnahmeöffnung mit dem Entnahmeelement des Analysators zu verbinden und weiters die Belüftungsöffnung zu öffnen bzw. an entsprechende Andockelemente des Analysators anzuschließen.

Aus der DE 21 66 571 ist eine Reagenzienflasche mit einer Belüftungsöffnung bekannt, welche an derselben Seite der Reagenzienflasche angeordnet ist wie die Entnahmeöffnung, wobei die Achsen der beiden Öffnungen parallel zueinander verlaufen. Allerdings ist auch bei der Ausführung nach der DE 21 66 571 ein gewisser Manipulationsaufwand notwendig um die Flasche an einen Analysator anzuschließen. So muß beispielsweise erst ein Verbindungsschlauch entfernt werden, welcher beide Öffnungen verbindet.

Aus US-A-4163500 ist ein durchstechbarer Flaschenverschluß bekannt, mit welchem über die Nadel einer Pumpeinrichtung 1 Tinte aus einer Flasche entnommen werden kann. Der Flaschenverschluß besteht aus einem elastischen Grundkörper 8, welcher eine zentrale, vordere Freistellung 14 sowie eine flaschenseitige, konzentrische Freistellung 15 aufweist. Die Freistellung 15 wird durch eine ringförmige, an der Innenseite des Flaschenhalses anliegende Dichtlippe 18 begrenzt, welche bei einem im Flascheninneren entstehenden Unterdruck (bei Entnahme des Flascheninhalts) eine Ventilfunktion für die zum Druckausgleich einströmende Luft aufweist. Ein ringförmiger Raum 19 zwischen der Dichtlippe 18 und dem Flaschenhals ist über einen im ersten Bereich parallel zur Flaschenachse, in einem zweiten Bereich senkrecht zur Flaschenachse abgewinkelten, zur Ausnehmung 14 geführten Luftkanal 20 mit der Öffnung 26 der Metallkappe 25 verbunden.

Aufgabe der Erfindung ist es, eine Reagenzienflasche zum Einsatz in einen Probenanalysator vorzuschlagen, welche auf einfache Weise in das Gerät eingesetzt werden kann, wobei der Manipulationsaufwand möglichst gering gehalten werden soll.

Diese Aufgabe wird erfindungsgemäß dadurch gelöst, daß an die Ausnehmung des Stopfens ein vorgestochener, jedoch elastisch dicht verschlossener Bereich anschließt, daß die Entnahmeöffnung und die Belüftungsöffnung an derselben Seite der Reagenzienflasche angeordnet sind, und die Achsen der beiden Öffnungen parallel zueinander verlaufen, sowie daß beide Öffnungen beim Einsetzen der Reagenzienflasche in den Analysator in einem Arbeitsgang an entsprechende Belüftungs- bzw. Entnahmeelemente des Analysators andockbar sind. Dabei werden die Folienabdeckungen der beiden Öffnungen von den Belüftungs- bzw. Entnahmeelementen durchstochen und gleichzeitig eine Verbindung zum Analysator hergestellt. Erst durch das Vorstechen des Stopfens wird das Einstechen des Entnahmeelementes mit erheblich weniger Kraftaufwand möglich, wobei auch relativ stumpfe Entnahmeelemente im Probenanalysator verwendet werden können. Beim Reinigen des Nadelbereiches kann dadurch die Verletzungsgefahr für den Benutzer beseitigt werden.

Der elastische Flaschenstopfen kann aus einem Elastomer, beispielsweise Silikon, EPDM oder ähnlichem bestehen, und mit einer Alu/PE-Folie versiegelt sein. Der Siegelprozeß dient einerseits zum Umbördeln des Flaschenhalsrandes, sodaß der Elastomerstopfen in der Flasche festgehalten wird und andererseits als Permeationssperre und Qualitätssiegel. Der Benutzer kann somit erkennen, ob die Flasche unversehrt ist.

Ein weiterer Nachteil der bekannten Reagenzienflaschen besteht darin, daß der Füllstand an Reagenzmittel meist nur außen am Behälter durch entsprechende Marken ablesbar ist. Dies setzt aber eine dauernde Kontrolle dieser Marken voraus.

In einer erfindungsgemäßen Weiterentwicklung ist deshalb vorgesehen, daß der elastische Stopfen in einer zweiten, in Einbaustellung der Reagenzienflasche über dem Entnahmerohr liegenden Position von einem Element zur Messung des Füllstandes durchstechbar ist, wobei die durchstechbare Position ebenfalls eine Ausnehmung und einen vorgestochenen Bereich aufweist. Das Element zur Messung des Füllstandes übermittelt seine Signale der Auswerteeinheit des Analysators, welcher ab einem gewissen Füllstand entsprechende Warnsignale zum Wechsel der Reagenzienflasche anzeigen kann bzw. den Benützer darauf hinweisen kann, wieviele Messungen noch vor einem Wechsel der Reagenzienflasche möglich sind.

In einer Weiterbildung der Erfindung ist vorgesehen, daß an der Innenseite des Stopfens an den bzw. die vorgestochenen Bereiche konische Dichtflächen anschließen. Im Gegensatz zur Ausführung nach der DE 39 38 559 Al, wo beim Durchdringen eines Elastomers mit einer spitzen Nadel unkontrollierbare Bruchstellen entstehen, die keine einwandfreie Dichtfunktion garantieren, sorgen die konischen Dichtflächen, welche an die vorgestochenen Bereiche anschließen, im eingebauten Zustand immer für eine absolute Dichtheit, da sich die konischen Bereiche an ein Entnahmeelement bzw. ein Element zur Messung des Füllstandes optimal anschmiegen.

Beim Einsetzen der Reagenzienflasche in das Analysengerät wird einerseits die Belüftungsöffnung mit einem im Gerät eingebauten Aufstechdorn durchstoßen und andererseits wird bei der Entnahmeöffnung mit einem Füllstandssensor und einem Entnahmerohr zuerst die Schutzfolie und dann der während der Produktion vorgestochene Stopfen durchdrungen.

Um den Stopfen während des Duchstechens vor zu großer Durchbiegung zu schützen, weist dieser eine an der Innenseite angeordnete Stützscheibe auf, welche sich an einem Vorsprung des Flaschenhalses abstützt und im Bereich der beiden durchstechbaren Positionen Öffnungen aufweist.

Eine Ausgestaltung der Erfindung sieht vor, daß in der zweiten durchstechbaren Position ein Lichtleitstab zur Messung des Füllstandes einstechbar ist, wobei der Flaschenhals der Entnahmeöffnung zumindest in dem in Einbaustellung oben liegenden Bereich eine Erweiterung zur Aufnahme von die optische Messung störenden Luftblasen aufweist.

Zur besseren Handhabung der Reagenzienflasche ist es von Vorteil, wenn diese in zwei gegenüberliegenden Seitenflächen je eine Griffmulde aufweist, welche den Flaschenquerschnitt im Bereich der Griffmulden verringern und die Formstabilität der Reagenzienflasche erhöhen.

Ein weiterer Vorteil der vorliegenden Erfindung liegt darin, daß die Reagenzienflasche nach deren Entleerung als Waste-Flasche im Analysator verwendbar ist, wobei in den elastischen Stopfen der Entnahmeöffnung die Anschlußleitung einer Vakuumpumpe und in die Belüftungsöffnung eine Einheit enthaltend eine Zuleitung und ein Element zur Füllstandsmessung einsetzbar ist.

Da die Reagenzienflasche bei ihrer Verwendung als Waste-Behälter Unterdruckkräften standhalten muß, ist es von Vorteil, wenn die Reagenzienflasche annähernd in der Mitte zweier gegenüberliegender Seitenflächen Einbuchtungen aufweist, welche die beiden Seitenflächen gegeneinander abstützen. Diese beiden Einbuchtungen können erfindungsgemäß im Bereich der Griffmulden angeordnet sein.

Schließlich ist es erfindungsgemäß vorgesehen, daß der Flaschenhals der Entnahmeöffnung an der Außenseite eine umlaufende Ringnut bzw. zumindest zwei gegenüberliegende Eindellungen aufweist, welche zur Halterung der Reagenzienflasche in einer Befüllanlage dienen.

Die Erfindung wird im folgenden anhand von Zeichnungen näher erläutert. Es zeigen:
- Fig. 1: eine erfindungsgemäße Reagenzienflasche, welche in einem Probenanalysator eingesetzt ist in einer teilweisen Schnittdarstellung,
- Fig. 2: eine Ausführungsvariante der erfindungsgemäßen Reagenzienflasche in einer Schnittdarstellung gemäß Fig. 1,
- Fig. 3: eine Schnittdarstellung einer Reagenzienflasche gemäß Linie III-III in Fig. 2,
- Fig. 4: einen elastischen, durchstechbaren Stopfen der Reagenzienflasche gemäß Fig. 1 in einer vergrößerten Darstellung, die
- Fig. 5 bis 7: verschiedene Ansichten und Schnittdarstellungen einer Stützscheibe des elastischen Stopfens gemäß Fig. 4 sowie die
- Fig. 9 bis 11: ein Set von 4 Reagenzienflaschen mit unterschiedlichem Füllvolumen.

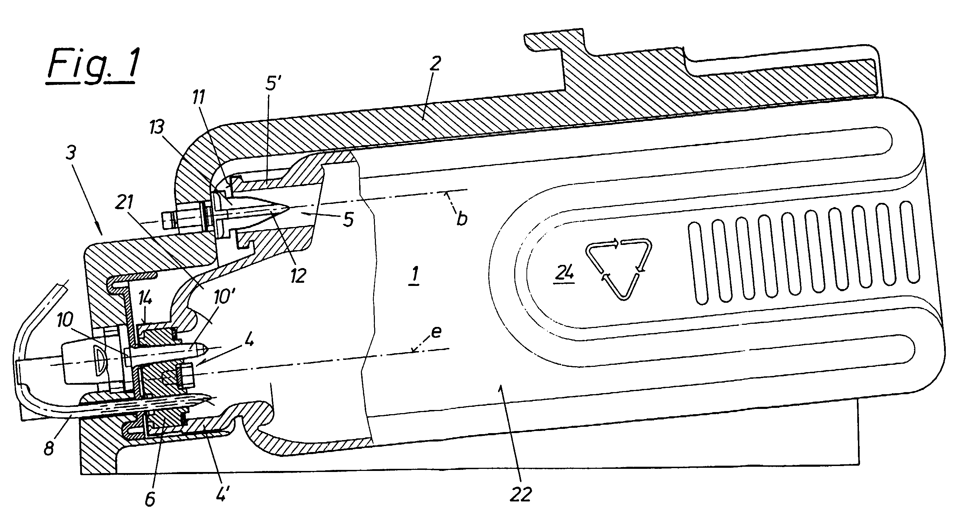

Die in Fig. 1 dargestellte Reagenzienflasche 1 ist im Aufnahmeteil 2 eines nicht näher dargestellen Probenanalysators 3 eingesetzt. Die Reagenzienflasche 1 weist an derselben Seite eine Entnahmeöffnung 4 sowie eine Belüftungsöffnung 5 auf, welche jeweils in einer flaschenhalsartigen Anformung 4', 5' der Reagenzienflasche 1 angeordnet sind. Die beiden Achsen e und b der Entnahmeöffnung 4 sowie der Belüftungsöffnung 5 verlaufen parallel zueinander und schließen mit der Horizontalen einen spitzen Winkel ein, sodaß die Reagenzienflasche 1 im eingesetzten Zustand eine schräg nach unten geneigte Entnahmeöffnung 4 aufweist, welche eine Entleerung mit nur geringer Restflüssigkeit zuläßt.

Die Reagenzienflasche 1 kann durch eine einfache lineare Einschiebebewegung entlang der Achsen e bzw. b in das Aufnahmeteil 2 des Probenanalysators 3 eingeschoben werden, wobei in einem Arbeitsgang entsprechende Entnahme- bzw. Belüftungselemente 8, 13 des Analysators in die beiden Öffnungen 4 und 5 eingestochen werden.

Die Entnahmeöffnung 4 wird durch einen elastischen Stopfen 6 verschlossen, welcher in einer ersten Position 7 7 von einem Entnahmerohr 8 des Analysators und in einer zweiten Position 9 von einem Element 10 zur Messung des Füllstandes durchstochen wird. Im dargestellten Beispiel ist das Element zur Messung des Füllstandes als Lichtleitstab 10' ausgeführt, wobei als Ausführungsvariante natürlich auch andere bekannte Elemente, wie beispielsweise Elektroden zur Messung der Leitfähigkeit, zur Messung des Füllstandes eingesetzt werden können.

Die Belüftungsöffnung 5 ist vor dem Einsetzen der mit einer Kalibrier-, Kontroll- oder Waschlösung gefüllten Reagenzienflasche 1 mit einer Folie 11 bedeckt, welche beim Einsetzen von einem mehrere Rippen 12 aufweisenden Aufstechdorn 13 durchstoßen wird.

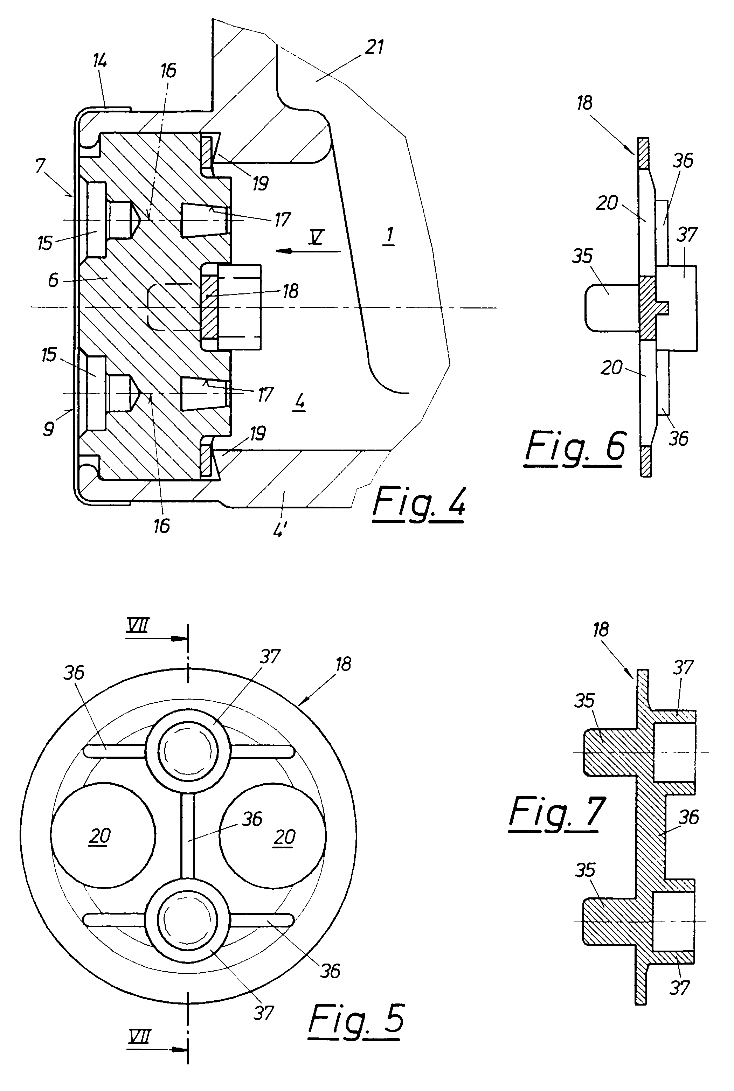

Weiters ist auch der elastische Stopfen 6 von einer Schutzfolie 14 abgedeckt, welche auch den oberen Teil des Flaschenhalses 4' der Entnahmeöffnung 4 bedeckt. Dieses Detail ist besser aus Fig. 4 ersichtlich, aus welcher auch erkennbar ist, daß in beiden durchstechbaren Positionen 7 und 9 Ausnehmungen 15 zum besseren Durchstechen der Folie 14 vorgesehen sind. An diese beiden Ausnehmungen 15 schließen vorgestochene Bereiche 16 an, welche während des Einsetzvorganges des Stopfens 6 in die Entnahmeöffnung 4 mit einem spitzen Dorn (Durchmesser 1 bis 2 mm) vorgestochen werden. Diese Bereiche bleiben aufgrund der Elastizität des Stopfens jedoch absolut dicht und dienen nur der leichteren Passage des Entnahmerohres 8 und des Lichtleiters 10 beim Einsetzen der Reagenzienflasche 1 in den Analysator. Auf der Innenseite des Stopfens 6 schließen an die Bereiche 16 konische Dichtflächen 17 an, welche das Entnahmerohr 8 8 und den Lichtleitstab 10' dicht umschließen.

Um den Belastungen beim Durchstechen des Stopfens 6 besser standzuhalten, weist dieser an seiner Innenseite eine Stützscheibe 18 auf, welche sich an einem Vorsprung 19 des Flaschenhalses 4' abstützt. Im Bereich der beiden durchstechbaren Positionen 7 und 9 weist die Stützscheibe 18 Öffnungen 20 auf, welche beim Einsetzen der Reagenzienflasche 1 in den Analysator vom Lichtleitstab 10' sowie vom Entnahmerohr 8 durchsetzt werden.

Fig. 5 zeigt eine Draufsicht auf die Stützscheibe 18 gemäß Pfeil V in Fig. 4, Fig. 6 einen Schnitt gemäß Fig. 4, sowie Fig. 7 einen Schnitt entlang der Linie VII-VII in Fig. 5. Die Stützscheibe 18 weist auf einer Seite zylindrische Fortsätze 35 zur Verankerung im elastischen Stopfen 6 auf und wird auf der anderen Seite durch Versteifungsrippen 36 verstärkt. Weiters weist die Stützscheibe Führungselemente 37 für deren Handhabung in der Abfüllanlage auf.

Falls zur Messung des Füllstandes optische Meßmethoden angewandt werden, beispielsweise in Form eines einstechbaren Lichtleitstabes 10', ist es von Vorteil, wenn der Flaschenhals 4' der Entnahmeöffnung 4 eine Erweiterung 21 zur Aufnahme von Luftblasen aufweist, welche beim Einstechen des Lichtleitstabes in die Reagenzienflasche 1 eingebracht werden und die optische Messung stören könnten. Allfällige Luftblasen können in die Erweiterung 21 aufsteigen.

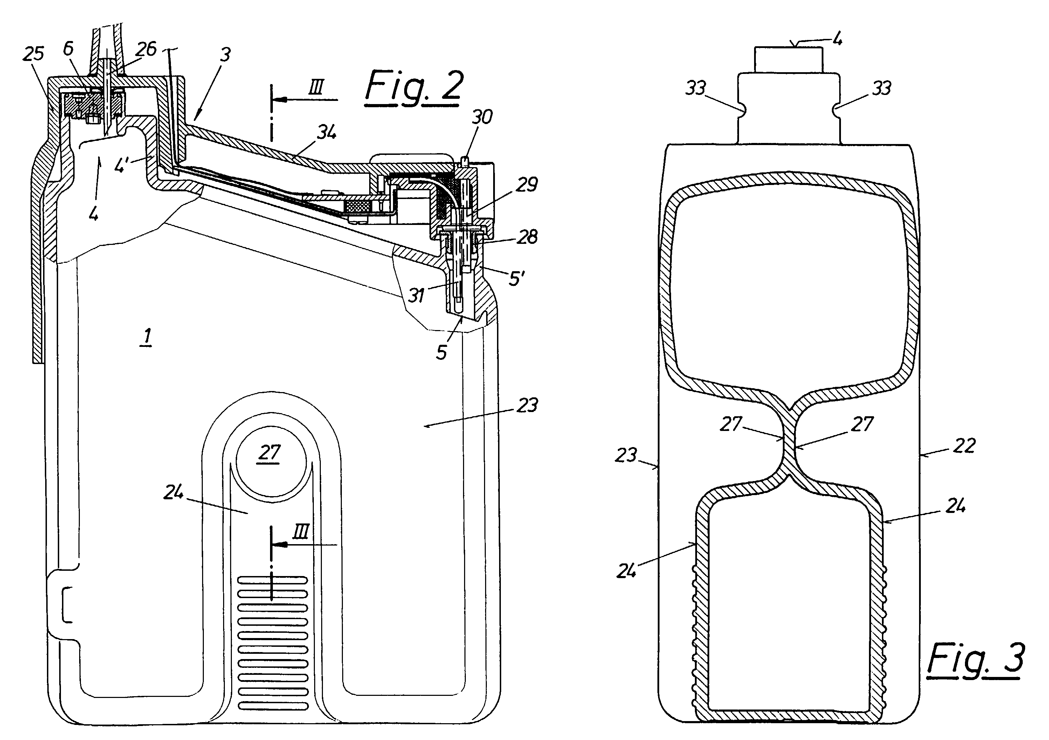

Wie insbesondere aus Fig. 3 ersichtlich, weist die Reagenzienflasche 1 an zwei gegenüberliegenden Seitenflächen 22, 23 je eine Griffmulde 24 auf, welche den Flaschenquerschnitt im Bereich der Griffmulden verringert und die Formstabilität der Reagenzienflasche 1 erhöht.

Leere Reagenzienflaschen können im Probenanalysator 3 auch als Abfallbehälter (Waste-Behälter) verwendet werden, wie dies aus Fig. 2 ersichtlich ist. Die leere Reagenzienflasche wird aus dem Analysator entnommen, wobei sich der elastische Stopfen in den Bereichen 16 durch elastische Verformung wieder schließt. Anschließend kann die Reagenzienflasche in einen Aufnahmeteil 25 des Analysators 3 eingesetzt werden, wobei der elastische Stopfen 6 in der Entnahmeöffnung 4 von einer Anschlußleitung 26 zu einer nicht dargestellten Vakuumpumpe durchstochen wird. Um die Formstabilität der Reagenzienflasche auch im Unterdruckbereich zu gewährleisten, ist annähernd in der Mitte zweier gegenüberliegender Seitenflächen 22, 23 jeweils eine Einbuchtung 27 vorgesehen, welche die beiden Seitenflächen 22, 23 gegeneinander abstützen. Bevor die Reagenzienflasche 1 als Waste-Flasche verwendet wird, wird in die Belüftungsöffnung 5 ein Dichtelement 28 eingesetzt. Beim Andocken der Waste-Flasche an einen federbelasteten Deckel 34 des Analysators wird in die Belüftungsöffnung 5 eine Einheit 29 eingesetzt, welche eine Zuleitung 30 für die im Analysator anfallenden flüssigen und gasförmigen Medien sowie ein Element 31 zur Füllstandsmessung aufweist. Auch dieses Element kann als Lichtleitstab ausgeführt sein.

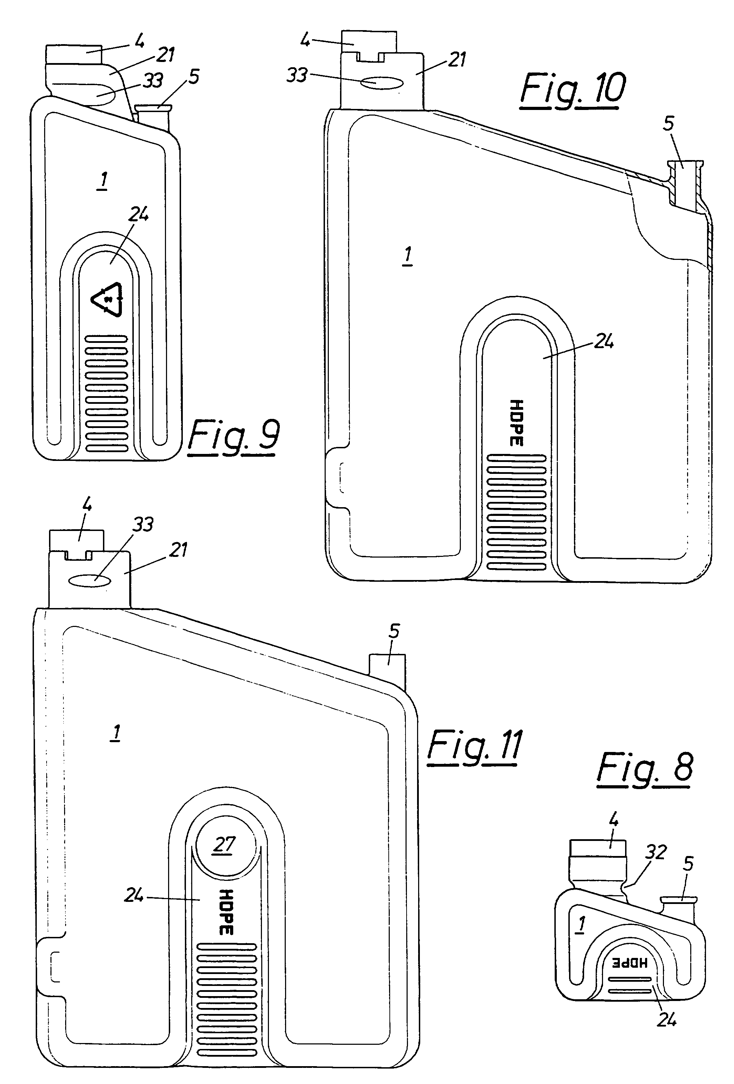

Zur Bestückung eines Analysators werden in der Regel gleichzeitig mehrere Reagenzien- bzw. Waste-Flaschen verwendet, welche ein unterschiedliches Fassungsvermögen aufweisen. In den Fig. 8 bis 11 ist ein Satz derartiger Flaschen dargestellt, wobei Fig. 8 ein 25ml-Fläschchen, Fig. 9 ein 100ml-, Fig. 10 ein 500ml- und Fig. 11 ein 800ml-Fläschchen zeigt. Die größte Flasche dieses Satzes, die in Fig. 11 dargestellte 800ml-Flasche, kann nach deren Entleerung als Waste-Flasche verwendet werden. Die Reagenzienflaschen in den Fig. 8 bis 11 zeigen am Flaschenhals 4' der Entnahmeöffnung 4 an der Außenseite eine umlaufende Ringnut 32 (Fig. 8) bzw. zwei gegenüberliegende Eindellungen 33. Diese dienen zur Halterung der Reagenzienflaschen in einer Befüllungsanlage.

## Patentansprüche

1. In einen Probenanalysator (3) einsetzbare Reagenzienflasche (1), mit einer von einem elastischen, durchstechbaren Stopfen (6) verschlossenen Entnahmeöffnung (4) sowie einer Belüftungsöffnung (5), welcher elastische Stopfen (6) außen von einer Schutzfolie (14) abgedeckt ist und in einer von einem Entnahmeelement (8) des Analysators (3) durchstechbaren Position (7) eine Ausnehmung (15) zum leichteren Durchstechen der Folie (14) aufweist, **dadurch gekennzeichnet,** daß an die Ausnehmung (15) des Stopfens (6) ein vorgestochener, jedoch elastisch dicht verschlossener Bereich (16) anschließt, daß die Entnahmeöffnung (4) und die Belüftungsöffnung (5) an derselben Seite der Reagenzienflasche (1) angeordnet sind, und die Achsen (e, b) der beiden Öffnungen (4, 5) parallel zueinander verlaufen, sowie daß beide Öffnungen (4, 5) beim Einsetzen der Reagenzienflasche (1) in den Analysator (3) in einem Arbeitsgang an entsprechende Belüftungs- bzw. Entnahmeelemente (8, 13) des Analysators (3) andockbar sind.

2. Reagenzienflasche nach Anspruch 1, **dadurch gekennzeichnet,** daß der elastische Stopfen (6) in einer zweiten, in Einbaustellung der Reagenzienflasche (1) über dem Entnahmerohr (8) liegenden Position (9) von einem Element (10) zur Messung des Füllstandes durchstechbar ist, wobei die durchstechbare Position (9) ebenfalls eine Ausnehmung (15) und einen vorgestochenen Bereich (16) aufweist.

3. Reagenzienflasche nach Anspruch 1 oder 2, **dadurch gekennzeichnet,** daß an der Innenseite des Stopfens (6) an den bzw. die vorgestochenen Bereiche (16) konische Dichtflächen (17) anschließen.

4. Reagenzienflasche nach Anspruch 2 oder 3, **dadurch gekennzeichnet,** daß der elastische Stopfen (6) eine an der Innenseite angeordnete Stützscheibe (18) aufweist, welche sich an einem Vorsprung (19) des Flaschenhalses (4') abstützt und im Bereich der beiden durchstechbaren Positionen (7, 9) Öffnungen (20) aufweist.

5. Reagenzienflasche nach einem der Ansprüche 2 bis 4, **dadurch gekennzeichnet,** daß in der zweiten durchstechbaren Position (9) ein Lichtleitstab (10') zur Messung des Füllstandes einstechbar ist, wobei der Flaschenhals (4') der Entnahmeöffnung (4) zumindest in dem in Einbaustellung oben liegenden Bereich eine Erweiterung (21) zur Aufnahme von die optische Messung störenden Luftblasen aufweist.

6. Reagenzienflasche nach einem der Ansprüche 1 bis 5, **dadurch gekennzeichnet,** daß die Reagenzienflasche (1) in zwei gegenüberliegenden Seitenflächen (22, 23) je eine Griffmulde (24) aufweist, welche den Flaschenquerschnitt im Bereich der Griffmulden (24) verringern und die Formstabilität der Reagenzienflasche (1) erhöhen.

7. Reagenzienflasche nach einem der Ansprüche 1 bis 6, **dadurch gekennzeichnet,** daß die Reagenzienflasche (1) annähernd in der Mitte zweier gegenüberliegenden Seitenflächen (22, 23) Einbuchtungen (27) aufweist, welche die beiden Seitenflächen (22, 23) gegeneinander abstützen.

8. Reagenzienflasche nach Anspruch 6 oder 7, **dadurch gekennzeichnet,** daß die beiden Einbuchtungen (27) im Bereich der Griffmulden (24) angeordnet sind.

9. Reagenzienflasche nach einem der Ansprüche 1 bis 8, **dadurch gekennzeichnet,** daß der Flaschenhals (4') der Entnahmeöffnung (4) an der Außenseite eine umlaufende Ringnut (32) bzw. zumindest zwei gegenüberliegende Eindellungen (33) aufweist, welche zur Halterung der Reagenzienflasche (1) in einer Befüllanlage dienen.

10. Reagenzienflasche nach einem der Ansprüche 1 bis 9, **dadurch gekennzeichnet,** daß die Reagenzienflasche (1) nach deren Entleerung als Waste-Flasche im Analysator (3) verwendbar ist, wobei in den elastischen Stopfen (6) der Entnahmeöffnung (4) die Anschlußleitung (26) einer Vakuumpumpe und in die Belüftungsöffnung (5) eine Einheit (29) enthaltend eine Zuleitung (30) und ein Element (31) zur Füllstandsmessung einsetzbar ist.

## Claims

1. Reagent bottle 1 suitable for insertion into a sample analyzer 3, with a sample discharge opening 4 plugged by an elastic, pierceable stopper 6, and an air inlet 5, which elastic stopper 6 is covered on its outside by a protective foil 14 and is provided with a recess 15 at a puncturing site 7 enabling a sampling element 8 of the analyzer 3 to puncture the foil 14 more easily, **wherein** an area 16 is provided, which borders on the recess 15 of the stopper 6 and is prepunctured yet sealing tightly and elastically, and wherein the sample discharge opening 4 and the air inlet 5 both are located on the same side of the reagent bottle 1, the axes e, b of the two openings 4, 5 running parallel to each other, and further wherein both openings 4, 5 dock onto suitable air inlet and sampling elements 8, 13 of the analyzer 3 in one and the same working process when the reagent bottle 1 is inserted into the analyzer 3.

2. Reagent bottle according to claim 1, **wherein** the elastic stopper 6 is pierceable at a second site 9 located above the sampling tube 8 in the inserted position of the reagent bottle 1, by an element 10 measuring the filling level, the puncturing site 9 also having a recess 15 and a prepunctured area 16.

3. Reagent bottle according to claim 1 or 2, **wherein** conical sealing faces 17 adjoin the prepunctured area or areas 16 on the inside of the stopper 6.

4. Reagent bottle according to claim 2 or 3, **wherein** the elastic stopper 6 is provided with a supporting plate 18 on its inside, which rests against, a projection 19 on the neck 4' and has openings 20 in the area of the two puncturing sites 7, 9.

5. Reagent bottle according to any of claims 2 to 4, **wherein** a light-guiding rod 10' for measuring the filling level is provided to pierce the second puncturing site 9, the neck 4' of the sample discharge opening 4 exhibiting an enlargement 21, at least in the area situated near the top in the inserted state, to receive air bubbles which would otherwise interfere with the optical measurement.

6. Reagent bottle according to any of claims 1 to 5, **wherein** the reagent bottle 1 is provided with a recessed grip 24 on either of two opposite side-faces 22, 23, which will reduce the cross-section of the bottle 1 in the recessed area 24 and increase the stability of the reagent bottle 1.

7. Reagent bottle according to any of claims 1 to 6, **wherein** the reagent bottle 1 is provided with depressions 27 situated approximately in the middle of two opposite side-faces 22, 23, in order to stabilize the two side-faces 22, 23 against each other.

8. Reagent bottle according to claim 6 or 7, **wherein** the two depressions 27 are located in the area of the recessed grips 24.

9. Reagent bottle according to any of claims 1 to 8, **wherein** the neck 4' of the sample discharge opening 4 has a continuous annular groove 32 running along its outside, or at least. two opposite dents 33 for the purpose of holding the reagent bottle 1 in a filling plant.

10. Reagent bottle according t.o any of claims 1 to 9, **wherein** the reagent bottle 1 can be used in the analyzer 3 as a waste bottle after having been emptied, the elastic stopper 6 of the sample discharge opening 4 receiving the connecting line 26 of a vacuum pump, and the air inlet 5 receiving a unit 29 containing a feed line 30 and an element. 31 for measuring the filling level of the bottle 1.

## Revendications

1. Récipient (1) pour réactif intégrable dans une installation d'analyse d'échantillon (3), comprenant une ouverture de prélèvement (4) obturée par un bouchon élastique (6) transperçable ainsi qu'une ouverture d'aération (5), ce bouchon (6) étant recouvert extérieurement par une pellicule de protection (14) et comportant, en une position (7) que peut traverser un élément de prélèvement (8) de l'analyseur (3), un évidement (15) facilitant le perçage de la pellicule (14),
caractérisé en ce qu'
à l'évidement (15) du bouchon (6) fait suite une zone prépercée (16) mais obturée de manière étanche du fait de son élasticité, les ouvertures de prélèvement (4) et d'aération (5) étant montées sur le même côté du récipient (1) avec leurs axes (e, b) parallèles entre eux, et ces deux ouvertures, lorsqu'on installe le récipient (1) dans l'analyseur, pouvant être, en une seule opération, raccordées aux éléments d'aération et de prélèvement (8, 13) de l'analyseur (3).

2. Récipient selon la revendication 1,
caractérisé en ce que
le bouchon élastique (6), en une deuxième position (9) qui, lorsque le récipient (1) est monté, se trouve au-dessus du tube de prélèvement (8), peut être traversé par un élément (10) servant à mesurer le remplissage, cette position (9) comportant également un évidement (15) et une zone prépercée (16).

3. Récipient selon la revendication 1 ou 2,
caractérisé en ce que
du côté interne du bouchon (6), des portées d'étanchéité (17) coniques prolongent la ou les zone(s) prépercée(s) (16).

4. Récipient selon la revendication 2 ou 3,
caractérisé en ce que
le bouchon élastique (6) porte, sur sa face interne, un disque de soutien (18) qui s'appuie sur une saillie (19) du col (4') du récipient et présente des ouvertures (20) dans la zone des deux positions de perforation (7, 9).

5. Récipient selon une des revendications 2 à 4,
caractérisé en ce que
dans la deuxième position de perforation (9), on peut emmancher une barrette à fibres optiques (10') pour mesurer le remplissage, et le col (4') du récipient, autour de l'ouverture de prélèvement (4), comporte dans la zone située en haut quand le récipient est monté, une partie élargie (21) servant à recueillir les bulles d'air perturbant la mesure optique.

6. Récipient selon une des revendications 1 à 5,
caractérisé en ce que
le récipient (1) présente sur chacune de deux faces latérales opposées (22, 23), un creux de saisie (24), avec pour effet de réduire en cet endroit la section du récipient et d'augmenter la résistance à la déformation du récipient.

7. Récipient selon une des revendications 1 à 6,
caractérisé en ce que
le récipient (1) présente, à peu après au milieu des deux faces latérales opposées (22, 23) des renfoncements (27) qui mettent les deux faces (22, 23) en appui l'une sur l'autre.

8. Récipient selon la revendication 6 ou 7,
caractérisé en ce que
les deux renfoncements (27) se trouvent dans la zone des creux de saisie (24).

9. Récipient selon une des revendications 1 à 8,
caractérisé en ce que
le col (4') de l'ouverture de prélèvement (4) présente sur sa face externe une rainure annulaire périphérique (32) ou au moins deux déformations en creux (33) se faisant face et servant à maintenir le récipient (1) dans une installation de remplissage.

10. Récipient selon une des revendications 1 à 9,
caractérisé en ce que
le récipient (1), une fois vidé, peut être utilisé dans l'analyseur (3) comme collecteur de déchets, en faisant passer à travers le bouchon élastique (6) de l'ouverture de prélèvement (4), la conduite de raccordement (26) d'une pompe à vide et en introduisant dans l'ouverture d'aération (5) un ensemble (29) comprenant une conduite d'amenée (30) et un élément (31) de mesure du remplissage.
